# EUROPEAN PATENT SPECIFICATION

(11) **EP 0 928 631 B1**
(45) Date of publication and mention of the grant of the patent: **08.06.2005**
(21) Application number: 99300075.1
(22) Date of filing: 06.01.1999
(51) Int. Cl.: B01D 53/86, B01D 53/46

(54) **Apparatus for treating exhaust gases containing hydrogen**
Vorrichtung zur Behandlung von wasserstoffhaltigen Abgasen
Dispositif de traitement des gaz d'échappement contenant de l'hydrogène

(30) Priority: 06.01.1998 JP 88498
(43) Date of publication of application: 14.07.1999
(73) Proprietor: FUJIKIN INCORPORATED, Osaka (JP); Hitachi, Ltd., Chiyoda-ku, Tokyo 101 (JP)
(72) Inventor: Tanabe, Yoshikazu, Oume-shi, Tokyo (JP); Minami, Yukio, Osaka (JP); Kawada, Koji, Osaka (JP); Ikeda, Nobukazu, Osaka (JP); Morimoto, Akihiro, Osaka (JP); Hirao, Keiji, Osaka (JP)
(74) Representative: Brown, Fraser Gregory James

(56) References cited:
- WO-A-95/00957
- WO-A-97/28085
- WO-A-98/29368
- DE-A- 19 548 235
- US-A- 4 119 706

## Description

The present invention relates to apparatus for treating exhaust gases containing hydrogen, and has particular reference to the treatment of exhaust gases from facilities and equipment such as semi-conducting manufacturing and chemical plants where hydrogen is used.

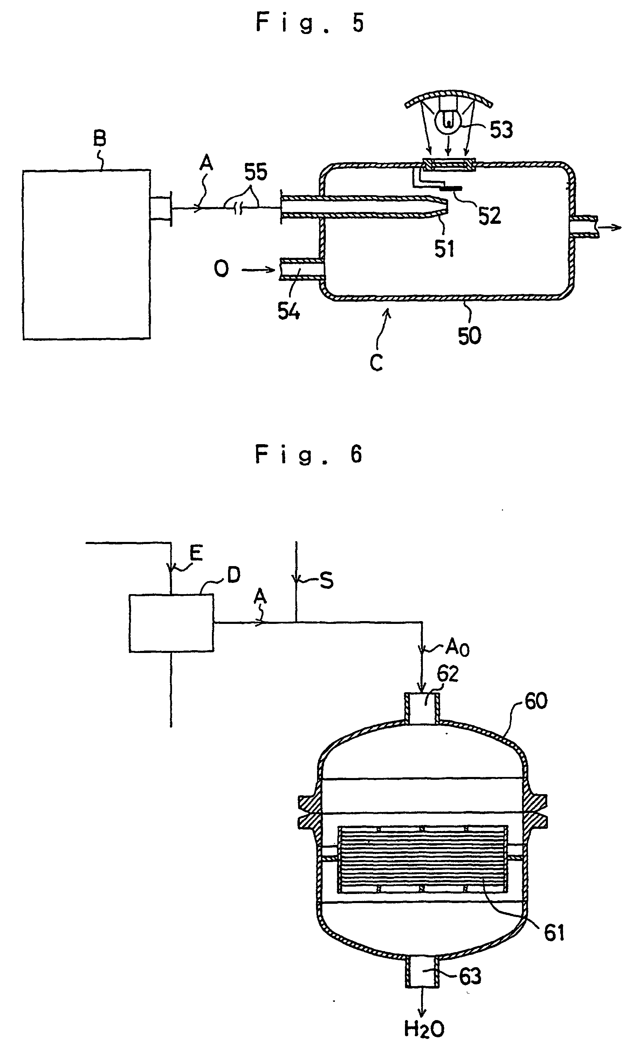

At semi-conductor manufacturing, chemical and other facilities and plants, exhaust gases containing hydrogen from processing lines are usually disposed of by burning at high temperatures in an incinerator. A typical prior art high temperature combustion apparatus used for the treatment of exhaust gases containing hydrogen from a semi-conductor manufacturing facility is illustrated in figure 5 of the accompanying drawings. In this prior art apparatus, an exhaust gas A containing hydrogen from a semi-conductor manufacturing line B which includes a hydrogen annealing furnace is fed into a quartz furnace 50. Said furnace comprises an ignition silicon chip 52 which can be heated by heating a lump 53. Said ignition silicone chip 52 is disposed adjacent the outlet of a nozzle 51 through which the exhaust gas A is admitted to the furnace 50. Said quartz furnace 50 is further equipped with an oxygen inlet pipe 54 for supplying oxygen to the furnace. In operation, hydrogen contained within the exhaust gas A is ignited by heating the ignition silicon chip 52, and the hydrogen burns in the presence of oxygen at a temperature in the range 1800 to 2000°C to form water. In order to ensure substantially complete combustion of the hydrogen, the feed rate of oxygen to the furnace is set at a level greater than half the feed rate of hydrogen to the furnace to the exhaust gas A.

The prior art apparatus described above with reference to figure 5 can conveniently be provided in the form of a small external combustion unit C which can be used to remove completely hydrogen from exhaust gases with high efficiency, provided that the flow rate of exhaust gases from the semi-conductor manufacturing line B or other plant is substantially constant, and the concentration of hydrogen in the exhaust gas A does not fluctuate too widely. Those skilled in the art will appreciate that fluctuations in the flow rate of exhaust gases A or in the concentration of hydrogen in the exhaust gases A will lead to unstable combustion within the quartz furnace 50. Such unstable combustion may, under some circumstances, lead to an explosion, and this represents a serious drawback and safety hazard. If the flow rate of hydrogen in the exhaust gas A declines to zero, or almost zero, for a material length of time, then the combustion flame at the end of the nozzle 51 will extinguish. Thus, unless the ignition silicon chip 52 is re-heated, combustion will not resume when the flow of hydrogen in the exhaust gases resumes. As a result, hydrogen containing gas will be discharged untreated from the combustion unit C, leading to a potentially dangerous situation.

A further problem inherent in the prior art apparatus of figure 5 is that if the discharge rate of exhaust gas A declines substantially, the combustion flame at the end of the nozzle 51 may be sucked back along the nozzle 51 towards the semi-conductor manufacturing line B. If allowed to continue, the combustion front may extend into the pipe 55 connecting the combustion unit C to the manufacturing line B, giving rise to a risk of explosion within the manufacturing line B itself.

Of course, in practice, the prior art combustion unit C is equipped with various safety measures, including an alarm, automatic ignition control and an automatic gas shut-off which is actuated in the event the combustion flame is extinguished. However, if such safety measures are actuated each time the combustion flame in the external unit C goes out, or the combustion becomes unstable then operation of the semi-conductor manufacturing line B is effected, and this may have an adverse effect on the quality of semi-conductor products manufactured on the line B.

An alternative catalytic combustor is used in nuclear power stations for recombining oxygen and hydrogen generated from reactor coolant water which is decomposed by radiation. An example of such a catalytic combustor which is disclosed in unexamined Japanese patent application no. 57-049895 is illustrated in figure 6 of the accompanying drawings. The combustor of figure 6 comprises a vessel 60 which is supplied with a mixture of hydrogen and oxygen A diluted by steam S to bring the concentration of hydrogen below the explosion limit. Said mixture of hydrogen and oxygen A is separated from a reactor coolant water E using an air extractor D. Said vessel 60 accommodates a catalyst unit 61 and is provided with an inlet 62 and an outlet 63. Said mixture A₀ of hydrogen and oxygen in steam is fed into the interior of the vessel through inlet 62 where it contacts the catalyst unit 61 which causes or allows the hydrogen and oxygen to recombine to form steam at high temperature. The steam thus produced is then discharged from the vessel through the outlet 63.

Whilst the apparatus of figure 6 is well suited to the treatment of large volumes of steam containing hydrogen and oxygen, the catalytic combustor is too large to be used conveniently in semi-conductor manufacturing facilities. Furthermore, the rate of reaction between hydrogen and oxygen in the catalytic combustor is relatively low, and as a result some unreacted hydrogen is discharged from the apparatus through the outlet 63. In order to achieve complete removal of hydrogen, therefore, a separate external combustion unit must be connected to the outlet 63 from the combustor 60, and this in turn requires additional and substantial investment in equipment.

In DE 195 48 235-A, a device is disclosed for removing hydrogen from a gas mixture containing free hydrogen and oxygen, by the catalytic oxidation of the hydrogen in a reaction chamber having a support coated with catalytically active materials. A part of the coated surface of the support is immersed in a liquid bath, the inlet of which also acts as the inlet for the gas mixture. The pressure in the chamber is controllable.

In US 4,119,706, a catalytic reactor is disclosed that is useful for carrying out a catalytic reaction. The reactor comprises a horizontally disposed reaction zone. Foraminous retaining means are disposed within the reactor and are adapted to be filled with particle-form catalytic material.

An object of the present invention is to provide a novel apparatus for treating exhaust gases containing hydrogen, particularly exhaust gases from semi-conductor manufacturing lines, chemical plants and the like.

Another object of the present invention is to alleviate some or all of the difficulties associated with the prior art exhaust gas treatment apparatus discussed above.

In particular, it is an object of the present invention to provide apparatus for the treatment of exhaust gases containing hydrogen which can accommodate fluctuations in the flow rate of the exhaust gases into the apparatus and/or in the concentration of hydrogen in the exhaust gases.

Another particular object of the present invention is to provide apparatus for the treatment of exhaust gases containing hydrogen which reduces or eliminates the risk of the combustion flame or front being drawn back into the discharge source of the exhaust gases.

Yet another particular object of the present invention is to provide apparatus for treatment of exhaust gases containing hydrogen which reduces or eliminates interruptions to the supply of hydrogen to manufacturing lines using hydrogen.

According to one aspect of the present invention there is provided apparatus for treating exhaust gases containing hydrogen as claimed in claim 1 below.

The apparatus of claim 1 can conveniently be used for treating exhaust gases from semi-conductor manufacturing lines and chemical plants. A typical semi-conductor manufacturing line includes a hydrogen annealing furnace which operates at a temperature of about 800°C and a pressure in the range 50 to 100mm H₂O above atmospheric pressure. The aspirating means of the present invention can be operated to provide a pressure reduction of 50 to 150mm H₂O, typically about 100mm H₂O. According to the present invention therefore the hydrogen containing exhaust gases are actively aspirated (sucked) from the discharged source which assists in overcoming the problems associated with fluctuating flow rates and hydrogen concentrations. That is, the aspirating means incorporated in the apparatus of the present invention establishes a smooth injection of exhaust gases into the reacting means of the invention.

It has been found in practice that about 70 to 98% of hydrogen in the exhaust gases is converted to water using the apparatus in accordance with the present invention. Oxygen is mixed with the exhaust gases by the mixing means in a stoichiometric ratio of hydrogen to oxygen in the range 1:1 to 2:1. Where the flow rate of exhaust gases or concentration of hydrogen in such exhaust gases into the apparatus of the present invention fluctuates significantly, the volumetric ratio of hydrogen to oxygen in the reacting means also fluctuates, and as a result the conversion rate of hydrogen to water varies. Where the flow rate of oxygen, hydrogen, or water into the reacting means suddenly increases, the conversion rate of hydrogen and oxygen to water falls, and the water vapour discharged from the reacting means will contain significant quantities of hydrogen.

In accordance with a particular embodiment of the present invention therefore there is provided apparatus as claimed in claim 2 below. Said apparatus as claimed in claim 2 comprises second reacting means for reacting unreacted hydrogen and oxygen discharged from the first reaction means to form water and second condensing means for condensing water formed in the second reacting means. Preferably, the second reacting means is connected to the first condensing means to receive unreacted hydrogen and oxygen therefrom, once steam formed in the first reacting means has been condensed to form liquid water.

In accordance with the apparatus of claim 2, therefore, the majority of any unreacted hydrogen discharged from the first reacting means is converted to water in the second reacting means, such that the amount of hydrogen discharged from the second reacting means will usually be negligible.

In accordance with a different particular embodiment of the present invention there is provided apparatus as claimed in claim 4 below. In the apparatus of claim 4, any unreacted hydrogen discharged from the first reacting means is aspirated by second aspirating means and mixed with oxygen and air at a second mixing means. The mixture of oxygen or air and unreacted hydrogen is then fed to a second to a second reacting means, where the unreacted water and oxygen is converted to water. The product gases of the second reacting means are then aspirated from the second reacting means, mixed with substantial quantities of air or nitrogen to dilute any trace amounts of remaining unreacted hydrogen, and then discharged to the atmosphere.

It has been found that the apparatus of claims 2 and 4 allow for substantially safe treatment of hydrogen-containing exhaust gases, even when such gases are discharged at high flow rates.

Preferably the second aspirating means are connected to the condensing means for aspirating unreacted hydrogen from the output of the first reacting means when the steam produced in the first reacting means has been condensed to liquid water.

In some embodiments, the or each condensing means may comprise independently a drain reservoir or a heat exchanger.

According to yet another embodiment of the present invention, the apparatus of claim 1, claim 2 or claim 4 further comprises back-flow check means between the discharge source of exhaust gases and the apparatus to prevent the back-flow of oxygen into the discharge source. Preferably, the back-flow check means comprises one or more gas accelerating means for accelerating the velocity of said aspirated exhaust gases to the apparatus. In some embodiments, said gas accelerating means may comprise one or more plates inserted in the flow path of said gases to the apparatus, the or each of plates having an orifice formed therein, which orifice provides a constriction in said flow path. It will be appreciated that the provision of constrictions in the flow path of exhaust gases causes or allows the velocity of such exhaust gases to be increased through the orifice(s), thus precluding the possibility of back flow of oxygen or air into the discharge source of exhaust gases, even if the flow rate of exhaust gases declines.

Preferably, the or each aspirating means comprises an ejector-type vacuum generator having a suction port adapted for connection to a source of gas to be aspirated, a drive fluid supply port adapted for connection to a supply of drive gas and mixing means for mixing the aspirated gas with the drive gas. Thus, the apparatus of claim 1 or claim 2 may comprise an ejector-type vacuum generator in which the suction port is connected to the discharge source of exhaust gases, and the drive fluid supplied port is connected to a supply of oxygen or air and/or nitrogen. In use, the supply of oxygen or air to the drive fluid supply port causes or allows exhaust gases to be aspirated to the suction port from the discharge source and mixed with the oxygen or air drive fluid. The ejector-type vacuum generator thus also serves as mixing means for mixing the aspirated exhaust gases with oxygen or air.

Typically the pressure drop caused by the supply of drive gas to the drive fluid supply port may be such as to cause or allow exhaust gases to be aspirated to the suction port at a flow rate of 2 to 6 litres per minute, typically about 4 litres per minute. Thus, the drive gas may be supplied to the drive fluid supply port of the ejector-type vacuum generator at a flow rate of about 2 to 3 litres per minute, typically about 2.4 litres per minute.

In the apparatus of claim 4, the suction port of a first ejector-type vacuum generator may be adapted for connection to the discharge source of exhaust gases, and the drive fluid supply port of the first ejector-type vacuum generator may be adapted for connection to a supply of oxygen or air as drive fluid; the suction port of a second ejector-type vacuum generator may be adapted for connection to the first condensing means for aspirating unreacted hydrogen from the first condensing means, and the fluid supply port of the second ejector-type vacuum generator may be adapted for connection to a supply of oxygen or air as drive fluid; and the suction port of a third ejector-type vacuum generator may be adapted for connection to the second reacting means for aspirating gas therefrom, and the fluid supply port of the third ejector-type vacuum generator may be adapted for connection to a supply of nitrogen or air, such that gases aspirated from the second reacting means are mixed with nitrogen or air to dilute the gases and are then discharged to the atmosphere.

Following is a description by way of example only with reference to the accompanying drawings of methods of carrying the present invention into effect.

In the drawings:-
Figure 1 is a schematic drawing of apparatus for treating hydrogen-containing exhaust gases from a semi-conductor manufacturing line in accordance with the present invention.
Figure 2 is a sectional view of a catalytic reactor for use in apparatus according to the present invention.
Figure 3 is a schematic diagram of testing apparatus for testing the apparatus for the present invention.
Figure 4 is a schematic diagram of apparatus for treating hydrogen-containing exhaust gases in accordance with another embodiment of the present invention.
Figure 5 is a part-schematic, part-sectional view of prior art apparatus for treating hydrogen-containing exhaust gases from a semi-conductor manufacturing line.
Figure 6 is a part-schematic, part-sectional view of apparatus for catalytically recombining hydrogen and oxygen generated from coolant water in a nuclear power station.

### Example 1

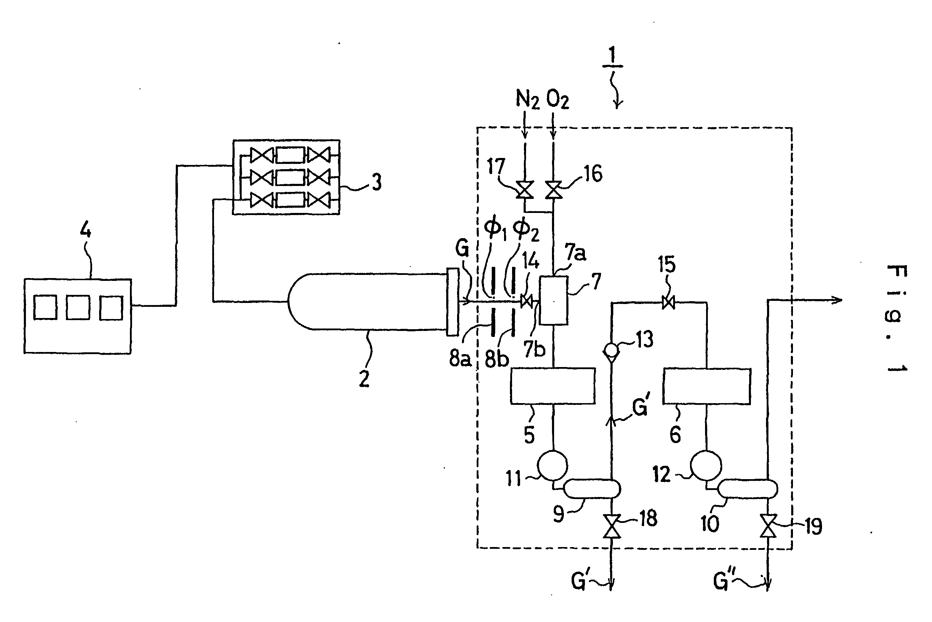

Figure 1 of the accompanying drawings shows an example of apparatus in accordance with the present invention for the treatment of hydrogen-containing exhaust gases. The apparatus 1 of figure 1 is suitable for treating exhaust gases from a semi-conductor manufacturing line, a chemical plant or other plant using hydrogen. In figure 1, the apparatus 1 is shown connected to a semi-conductor manufacturing line comprising a hydrogen annealing furnace 2. Said furnace 2 is supplied with gas from a gas supply 3 which is regulated by a control 4. Said hydrogen annealing furnace 2 serves as a discharge source of hydrogen-containing exhaust gases. A typical hydrogen annealing furnace has an internal volume of about 10 litres and is operated at a temperature of about 800°C with an internal pressure of about 500mm H₂O above atmospheric pressure.

The apparatus 1 of figure 1 comprises two reactors 5, 6, a vacuum generator 7, back-flow checks 8a, 8b, drain reservoirs 9, 10, hydrogen concentration meters 11, 12, a check valve 13 and control valves 14, 15. Exhaust gases G containing hydrogen are drawn into the reactor 5 from the hydrogen annealing furnace 2 by the vacuum generator 7. Hydrogen in the exhaust gas G is allowed to react with oxygen in reactors 5, 6 to form water vapour.

Said vacuum generator 7 is connected to an oxygen supply through a supply valve 16 and a nitrogen supply through supply valve 17. Each of the drain reservoirs 9 and 10 is provided with a drain valve 18, 19 respectively.

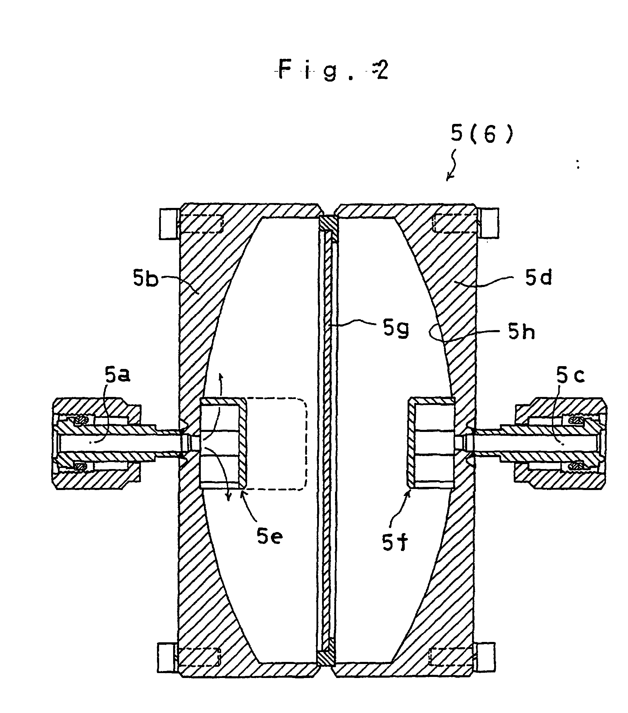

Each of the reactors 5, 6 comprises an assembly of a first reactor structural component 5b equipped with a gas feed port 5a, and a second reactor structural component 5d provided with a moisture gas take-out port 5c. The first and second reactor structural components 5b, 5d are assembled to define a closed interior space as shown in figure 2. Said interior space accommodates an inlet reflector unit 5e adjacent the gas feed port 5a, an outlet reflector unit 5f adjacent the moisture gas take-out port 5c and a diffusion filter 5g which extends across the interior space of the reactor intermediate the gas feed port 5a and gas take-out port 5c. Said second reactor structural component 5d is provided on its inner surface with a platinum coated catalyst 5h. Reactors of this kind are disclosed in more detail in WO-A-97/28085.

Said vacuum generator 7 is an ejector-type vacuum generator comprising a suction port 7b which is connected to the hydrogen annealing furnace 2 through said control valve 14 and a drive fluid supply port 7a which is connected to the oxygen and nitrogen supplies through said valves 16 and 17. In operation, the supply of oxygen of a mixture of oxygen and nitrogen to the drive fluid supply port 7a causes a pressure drop at the suction port 7b of more than about 100mm H₂O which causes or allows aspiration of the exhaust gases from the hydrogen annealing furnace 2 into the ejector-type vacuum generator.

Each of said back-flow checks 8a, 8b comprises a plate formed with an orifice therethrough. The bore dimension φ₁ of the back-flow check 8a is the same as the bore dimension φ₂ of the back-flow check 8b. Said back-flow checks 8a, 8b are adapted to prevent the back-flow of the drive gas into the hydrogen annealing furnace 2. The plates forming the back-flow checks 8a, 8b reduce the cross-sectional area of the gas flow path, and thus raise the flow velocity of the exhaust gas G flowing from the hydrogen annealing furnace 2 to the vacuum generator 7, thereby preventing the back-flow of oxygen or oxygen/nitrogen.

The apparatus 1 of figure 1 includes two back-flow checks 8a, 8b, although those skilled in the art would appreciate that one back-flow check can be used, or more than two. Equally, where more than one back-flow check is used, the bore dimensions of the back-flow checks may be different from one another.

Said drain reservoirs 9, 10 are adapted to condense steam discharged from the reactors 5, 6. Steam condenses to water on the inside walls of the drain reservoirs, and the condensed water is stored therein.

In operation, the oxygen supply valve 16 is open, and oxygen is caused or allowed to flow into the drive fluid supply port 7a of the vacuum generator 7 at a predetermined flow rate. As oxygen is thus supplied, a pressure drop is generated in the suction port 7b. The control valve 14 is then opened, and the exhaust gases G containing hydrogen are sucked from the hydrogen annealing furnace into the vacuum generator 7.

The aspirated exhaust gases G are fed into the reactor 5 along with oxygen from the oxygen supply. On entering the interior of the reactor, the gases impinge on the inlet reflector 5e and diffuse into the interior space of a reactor. Said gases are further diffused throughout the reactor by the diffusion filter 5g, such that the gases are substantially uniformly dispersed throughout the reactor before contacting the catalyst layer 5h on the second reactor structural component 5c.

On contacting the catalyst layer 5h on the second reactor structural component 5d, oxygen and nitrogen are split to form free radicals which then react very quickly with one another to form water. Typically, the reactor will be operated at an elevated temperature which is the operating temperature of the catalyst layer 5h.

Water generated within the reactor is produced in a form of water vapour and is discharged along with residual oxygen into the drain reservoir 9 through the moisture gas take-out port 5c. Said water vapour is condensed into liquid form in the drain reservoir 9 where it is stored.

It has been found that the apparatus of figure 1 allows a conversion rate of hydrogen and oxygen to water in the range 70 to 98%. Where the ratio of hydrogen to oxygen in the reactor is in the range 2:1 to 1:1, the extent of conversion may be as high as 98%, where the amount of unreacted of hydrogen in the exhaust gas G' from the drain reservoir 9 is negligible.

The flow-rate of exhaust gases G and/or hydrogen concentration in such exhaust gases from a hydrogen annealing furnace 2 may fluctuate violently during operation of the furnace 2. As a result, the volumetric ratio of hydrogen to oxygen flowing into the reactor 5 will also fluctuate widely. Such fluctuations in the hydrogen to oxygen volumetric ratio will give rise to some variation in the extent of reaction between hydrogen and oxygen in the reactor 5. In particular, where the flow-rate of oxygen, hydrogen or water vapour into the reactor 5 suddenly increases, the extent of reaction between hydrogen and oxygen will decline to below a desirable level, and exhaust gas G' from the drain reservoir 9 will contain undesirable amounts of hydrogen. Thus, the exhaust gas G' from the drain reservoir 9 is fed to the second reactor 6 through said check valve 13. In the second reactor 6, residual hydrogen and oxygen react to form water vapour. Thus, the amount of unreacted hydrogen in exhaust gas G" from the drain reservoir 10 is virtually negligible.

As mentioned above, under normal operating conditions, the flow-rate of exhaust gas G, the concentration of hydrogen in the exhaust gas G and/or the pressure within the hydrogen annealing furnace 2 will fluctuate widely. However, in accordance with the present invention, the outlet of the hydrogen annealing furnace 2 is maintained at a pre-determined reduced pressure by the vacuum generator 7, and thus the exhaust G is fed smoothly into the reactor regardless of the operating conditions of hydrogen annealing furnace 2. In addition, said back-flow checks 8a, 8b on the outlet side of the hydrogen annealing furnace 2 raise the flow of velocity of the exhaust gas G. Thus, even if the flow rate of exhaust gas G, or the pressure within the annealing furnace 2 changes suddenly, there is substantially no chance of oxygen in the vacuum generator 7 flowing back into the hydrogen annealing furnace 2.

### Example 2

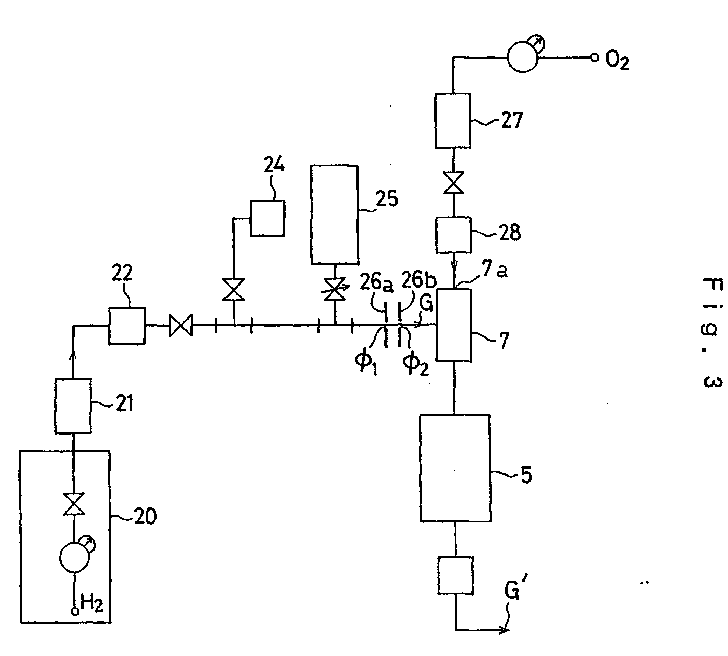

A testing apparatus for testing the apparatus 1 shown in figure 1 is illustrated in figure 3. In the testing apparatus of figure 3, a hydrogen supply unit 20 is substituted for the hydrogen annealing furnace 2. Hydrogen from the hydrogen supply unit 20 is fed to the vacuum generator 7 through a mass flow meter 21, a hydrogen concentration detector 22, a pressure gauge 24, a quadrupole mass spectrometer 25 and outflow orifices 26a and 26b. The bore dimension at each of said orifices 26a, 26b is 1.0mmφ. Oxygen is supplied to the drive fluid supply port 7a of a vacuum generator 7 through a mass flow metre 27 and a pressure gauge 28. The reactor of the testing apparatus has an outer diameter of about 114mmφ, a thickness of about 31mm and an interior volume of 86cm³. The internal surface of the second structural component of the reactor 5 is provided with a platinum coated catalyst layer having a surface area of about 99cm².

Table 1 below shows the relationship between the flow rate and pressure of the hydrogen-containing gas G, the concentration of hydrogen in the gas G, the amount of O₂ fed into the vacuum generator 7 and the residual hydrogen concentration in the exhaust gas G' discharged from the reactor.

| Exhaust gas containing hydrogen | | | Amount of O₂ supplied to vacuum generator 7 (SLM) | Concentration of H₂ contained in exahust gas G' discharged from the reactor 5 (%) | Concentration of O₂ which has flowed back to the hydrogen annealing furnace 2 (%) |
|---|---|---|---|---|---|
| Flow rate (SLM) | H₂ Concentration (%) | Pressure at the upstream side of the orifice (mmH₂ O) | | | |
| 2 | 20 | 10050 | 2 | 0.02 | <0.01 |
| 2 | 50 | " | 2 | 0.03 | " |
| 2 | 100 | " | 2 | 0.04 | " |
| 5 | 20 | 10200 | 5 | 0.04 | " |
| 5 | 50 | " | 5 | 0.07 | " |
| 5 | 100 | " | 5 | 0.09 | " |
| 10 | 20 | 10750 | 10 | 0.08 | " |
| 10 | 50 | " | 10 | 0.14 | " |
| 10 | 100 | " | 10 | 0.20 | " |

As can be seen from table 2, the apparatus 1 of figure 1 can be used to treat exhaust gases G continuously, smoothly and on a stable basis, regardless of any fluctuations in the flow-rate of gas G from the discharge source and/or the concentration of hydrogen in such exhaust gases.

### Example 3

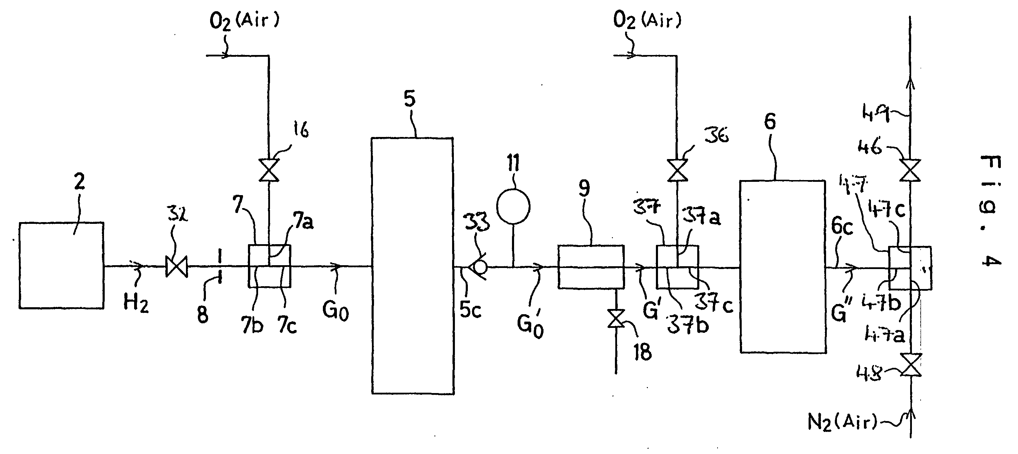

Figure 4 shows another example of apparatus for the treatment of hydrogen-containing exhaust gases in accordance with the present invention. In the apparatus of figure 4, hydrogen gas from a processing chamber 2 or the like in a semi-conductor manufacturing line flows into the suction port 7b of a first vacuum generator 7 through a control valve 32 and a back-flow check orifice 8. The flow-rate of hydrogen into the suction port 7b is approximate 4 litres per minute.

The drive fluid supply port 7a of the first vacuum generator 7 is supplied with oxygen or air at a rate of about 2.4 litres per minute through the valve 17. As a result, hydrogen is sucked into the first vacuum generator 7 through the suction port 7b, and a mixture Gₒ of hydrogen and oxygen or air flows into the first reactor 5.

Said first reactor 5 is disc-shaped, having an outside diameter of about 228mm and a thickness of about 38mm. Said reactor has a moisture-generating capacity of about 4000cm³ per minute. Said reactor 5 contains a platinum coated catalyst layer and, as described above, hydrogen and oxygen entering the reactor react and form water vapour. A mixture G₀' of water vapour and unreacted hydrogen and oxygen or air is then fed into the drain reservoir 9 through the moisture gas take-out port 5c of the reactor 5 and a check valve 33. The concentration of hydrogen in the mixture Gₒ' is continuously monitored by a hydrogen concentration meter 11. Whenever the hydrogen concentration rises above the explosion limit, safety measures (not shown) including an alarm will be actuated.

In the apparatus of example 3, a drain reservoir 9 is used to condense water vapour produced in the reactor 5, but those skilled in the art will appreciate that a heat exchanger may be substituted for the drain reservoir 9.

Steam in the mixture fluid Gₒ' condenses in the drain reservoir and is collected therein. Such moisture can be discharged from the drain reservoir 9 through the drain valve 18. The residual gas G' from which the water vapour has been substantially removed is then passed to the suction port 37b of a second vacuum generator 37.

Oxygen or air is supplied to the drive fluid supply port 37a of said second vacuum generator 37 through a valve 36. As a result, the residual gas G' is sucked into the suction portion 37b and is mixed with oxygen or air supplied to the drive fluid supply port 37a. A mixture of oxygen or air and residual gas G' is then fed into a second reactor 6 from the discharge port 37c of the second vacuum generator 37.

Said second reactor 6 is also disc-shaped having an outer diameter of about 114mm and a thickness of about 34mm. Said second reactor 6 has a moisture generating capacitor of about 1000cm³ per minute. As a general point, those skilled in the art will appreciate that the moisture-generating capacity of the second reactor can be less than the moisture-generating capacity of the first reactor. In the second reactor, unreacted hydrogen in the residual gas G' and oxygen reacts to form water vapour.

Product gas G" formed in the second reactor is discharged through the moisture take-out ports 6c of the second reactor and is aspirated to the suction port 47b of a third vacuum generator 47. Nitrogen or air is supplied to the drive fluid supply port 47a of said third vacuum generator 47 through a valve 48. The product gas G" is thus aspirated to suction port B and is mixed therein with nitrogen or air to dilute said product gas G". The resultant mixture of product gas G" and nitrogen or air is then discharged to the atmosphere from the drive fluid discharge port 47c through a vent pipe 49.

It has been found that when the exhaust gas G1 is discharged into the atmosphere, the concentration of unreacted hydrogen is reduced to less than 700 parts per million which can be said to be harmless.

## Claims

1. Apparatus for treating exhaust gases containing hydrogen, which apparatus comprises:
aspirating means (7,16) for aspirating exhaust gases (G) containing hydrogen from a discharge source of said exhaust gases;
mixing means (7,16) for mixing the aspirated exhaust gases with oxygen or air;
reacting means (5) for reacting the mixed hydrogen and oxygen or air to form water, which reacting means comprises catalytic means (5h) for generating oxygen and hydrogen free radicals from oxygen and said exhaust gases respectively, which oxygen and hydrogen free radicals react together to form water;
and condensing means (9) for condensing water formed in the reactor;
**characterised in that** said apparatus comprises an ejector-type vacuum generator (7) having a suction part (7b) adapted for connection to said discharge source of said exhaust gases, a drive fluid supply port (7a) adapted for connection to a supply of oxygen or air, and mixing means for mixing exhaust gases aspirated to the suction port of said ejector-type vacuum generator with oxygen or air supplied to the drive fluid supply port;
and **in that** the or each reacting means (5,6) comprises an air-tight vessel, which vessel comprises a gas inlet (5a) and a water vapour outlet (5c), and an internal surface of the vessel is lined with a catalytic material (5h) capable of splitting oxygen and hydrogen molecules to form free radicals.

2. Apparatus as claimed in claim 1, comprising:
aspirating means (7,16) for aspirating exhaust gases containing hydrogen from a discharge source of said exhaust gases;
mixing means (7,16) for mixing the aspirated exhaust gases with oxygen or air;
first reacting means (5) for reacting the mixed hydrogen and oxygen or air to form water, which reacting means comprises catalytic means (5h) for generating oxygen and hydrogen free radicals from oxygen and said exhaust gases respectively, which oxygen and hydrogen free radicals react together to form water;
first condensing means (9) for condensing water formed in the reactor;
second reacting means (6) for reacting unreacted hydrogen and oxygen (G') discharged from the first reacting means to form water, which second reacting means comprises catalytic means (5h) for generating oxygen and hydrogen free radicals from the unreacted oxygen and hydrogen respectively, which oxygen and hydrogen free radicals react together to form water;
and second condensing means (10) for condensing water formed in the second reacting means.

3. Apparatus as claimed in claim 2, **characterised in that** each of said first and second condensing means (9,10) comprises independently a drain reservoir or a heat exchanger.

4. Apparatus as claimed in claim 1, comprising:
first aspirating means (7) for aspirating exhaust gases (G₀) containing hydrogen from a discharge source of said exhaust gases;
first mixing means (7) for mixing the aspirated exhaust gases with oxygen or air;
first reacting means (5) for reacting the mixed hydrogen and oxygen or air to form water, which reacting means comprises catalytic means (5h) for generating oxygen and hydrogen free radicals from oxygen and said exhaust gases respectively, which oxygen and hydrogen free radicals react together to form water;
condensing means (9) for condensing water formed in the reactor;
second aspirating means (37) for aspirating unreacted hydrogen (G') discharged from the first reacting means;
second mixing means (37) for mixing the unreacted hydrogen with oxygen or air;
second reacting means (6) for reacting said unreacted hydrogen and oxygen or air to form water, which second reacting means comprises catalytic means (5h) for generating hydrogen and oxygen free radicals from the unreacted hydrogen and oxygen respectively, which hydrogen and oxygen free radicals react together to form water;
third aspirating means (47) for aspirating gases (G") discharged from the second reacting means;
and discharging (47) means for mixing said gases discharged from the second reacting means with air or nitrogen and discharging the resulting mixture of gases to the atmosphere.

5. Apparatus as claimed in claim 4, **characterised in that** said apparatus comprises:
a first ejector-type vacuum generator (7) having a suction port (7b) adapted for connection to said discharge source of said exhaust gases, a drive fluid supply port (7a) adapted for connection to a supply of oxygen or air, and mixing means for mixing exhaust gases aspirated to the suction port with oxygen or air supplied to the drive fluid supply port;
a second ejector-type vacuum generator (37) having a suction port (37b) adapted for connection to said first condensing means, a drive fluid supply port (37a) adapted for connection to a supply of oxygen or air, and mixing means for mixing unreacted hydrogen aspirated to the suction port with oxygen or air supplied to the drive fluid supply port;
and a third ejector-type vacuum generator (47) having a suction port (47b) adapted for connection to said second reacting means, a drive fluid supply port (47a) adapted for connection to a supply of nitrogen gas or air, and mixing means for mixing gas aspirated to the suction port with nitrogen gas or air supplied to the drive fluid supply port.

6. Apparatus as claimed in claim 1 or claim 5, **characterised in that** said condensing means (9) comprises a drain reservoir or a heat exchanger.

7. Apparatus as claimed in any preceding claim, further comprising backflow check means (8a,8b) between the discharge source of exhaust gases and the apparatus to prevent the backflow of oxygen into said discharge source.

8. Apparatus as claimed in claim 7, **characterised in that** said backflow check means comprises one or more gas accelerating means for increasing the velocity of said aspirated exhaust gases to the apparatus.

9. Apparatus as claimed in claim 8, **characterised in that** said gas accelerating means comprises one or more plates (8a,8b) inserted in the flow path of said exhaust gases to the apparatus, the or each plate having an orifice (φ₁,φ₂) formed therein, which orifice provides a constriction in said flow path.

10. Apparatus as claimed in claim 1, wherein the catalytic material is provided on only part of the internal surface of the vessel in juxtaposition with the water vapour outlet.

11. Apparatus as claimed in claim 1 or claim 10, wherein said catalytic material comprises platinum.

12. Apparatus as claimed in anyone of claims 9-11, wherein the vessel further comprises a first gas deflector (5e) associated with the inlet, a second gas deflector (5f) associated with the outlet and a gas diffusion filter (5g) which extends across the interior of the vessel substantially equidistant the inlet and outlet.

## Patentansprüche

1. Vorrichtung zur Behandlung von wasserstoffhaltigen Abgasen, umfassend:
Ansaugmittel (7, 16) zum Ansaugen von wasserstoffhaltigen Abgasen (G) aus einer Abgasausstoßquelle;
Mischmittel (7, 16) zum Mischen der angesaugten Abgase mit Sauerstoff oder Luft;
Reaktionsmittel (5), um den vermischten Wasserstoff und Sauerstoff oder Luft zum Reagieren zu bringen, um Wasser zu bilden, wobei das Reaktionsmittel katalytische Mittel (5h) umfasst, die freie Sauerstoff- und Wasserstoffradikale aus dem Sauerstoff bzw. den Abgasen erzeugen, wobei die freien Sauerstoff- und Wasserstoffradikale miteinander zu Wasser reagieren; und Kondensationsmittel (9) zum Kondensieren von im dem Reaktor gebildetem Wasser;
**dadurch gekennzeichnet, dass** die Vorrichtung einen Ejektor-Vakuumgenerator (7) umfasst, der eine Saugöffnung (7b), die ausgebildet ist, mit der Abgasausstoßquelle verbunden zu sein, eine Antriebsfluid-Zufuhröffnung (7a), die ausgebildet ist, mit einem Sauerstoff- oder Luftvorrat verbunden zu sein, und Mischmittel enthält, die an der Saugöffnung des E-jektor-Vakuumgenerators angesaugten Abgase mit Sauerstoff oder Luft mischen, die der Antriebsfluid-Zufuhröffnung zugeführt werden;
und dass das oder jedes Reaktionsmittel (5, 6) einen luftdichten Behälter umfasst, der einen Gaseinlass (5a) und einen Wasserdampfauslass (5c) umfasst, und eine Innenfläche des Behälters mit einem katalytischen Material (5h) ausgekleidet ist, das in der Lage ist, Sauerstoff- und Wasserstoffmoleküle in freie Radikale zu spalten.

2. Vorrichtung nach Anspruch 1, umfassend:
Ansaugmittel (7, 16) zum Ansaugen von wasserstoffhaltigen Abgasen aus einer Abgasausstoßquelle;
Mischmittel (7, 16) zum Mischen der angesaugten Abgase mit Sauerstoff oder Luft;
erste Reaktionsmittel (5), um den vermischten Wasserstoff und Sauerstoff oder Luft zum Reagieren zu bringen, um Wasser zu bilden, wobei das Reaktionsmittel katalytische Mittel (5h) umfasst, die freie Sauerstoff- und Wasserstoffradikale aus dem Sauerstoff bzw. den Abgasen erzeugen, wobei die freien Sauerstoff- und Wasserstoffradikale miteinander zu Wasser reagieren; erste Kondensationsmittel (9) zum Kondensieren von im dem Reaktor gebildetem Wasser;
zweite Reaktionsmittel (6), um nicht reagierten Wasserstoff und Sauerstoff (G'), die von dem ersten Reaktionsmittel ausgestoßen werden, zum Reagieren zu bringen, um Wasser zu bilden, wobei das zweite Reaktionsmittel katalytische Mittel (5h) umfasst, die freie Sauerstoff- und Wasserstoffradikale aus dem nicht reagierten Sauerstoff bzw. dem Wasserstoff erzeugen, wobei die freien Sauerstoff- und Wasserstoffradikale miteinander zu Wasser reagieren; zweite Kondensationsmittel (10) zum Kondensieren von in dem zweiten Reaktionsmittel gebildetem Wasser.

3. Vorrichtung nach Anspruch 2, **dadurch gekennzeichnet, dass** das erste und zweite Kondensationsmittel (9, 10) jeweils unabhängig voneinander ein Abflussbecken oder einen Wärmetauscher umfassen.

4. Vorrichtung nach Anspruch 1, umfassend:
erste Ansaugmittel (7) zum Ansaugen von wasserstoffhaltigen Abgasen (G₀) aus einer Abgasausstoßquelle;
erste Mischmittel (7) zum Mischen der angesaugten Abgase mit Sauerstoff oder Luft;
erste Reaktionsmittel (5), um den vermischten Wasserstoff und Sauerstoff oder Luft zum Reagieren zu bringen, um Wasser zu bilden, wobei das Reaktionsmittel katalytische Mittel (5h) umfasst, die freie Sauerstoff- und Wasserstoffradikale aus dem Sauerstoff bzw. den Abgasen erzeugen, wobei die freien Sauerstoff- und Wasserstoffradikale miteinander zu Wasser reagieren; Kondensationsmittel (9) zum Kondensieren von in dem Reaktor gebildetem Wasser;
zweite Ansaugmittel (37) zum Ansaugen von nicht reagiertem Wasserstoff (G'), der von dem ersten Reaktionsmittel ausgestoßen wird;
zweite Mischmittel (37) zum Mischen des nicht reagierten Wasserstoffs mit Sauerstoff oder Luft;
zweite Reaktionsmittel (6), um nicht reagierten Wasserstoff und Sauerstoff zum Reagieren zu bringen, um Wasser zu bilden, wobei das zweite Reaktionsmittel katalytische Mittel (5h) umfasst, die freie Sauerstoff- und Wasserstoffradikale aus dem nicht reagierten Sauerstoff bzw. dem Wasserstoff erzeugen, wobei die freien Sauerstoff- und Wasserstoffradikale miteinander zu Wasser reagieren;
dritte Ansaugmittel (47) zum Ansaugen von Gasen (G"), die von dem zweiten Reaktionsmittel ausgestoßen werden;
und Ausstoßmittel (47) zum Mischen der von dem zweiten Reaktionsmittel ausgestoßenen Gase mit Luft oder Stickstoff und zum Ausstoßen des daraus resultierenden Gasgemischs in die Atmosphäre.

5. Vorrichtung nach Anspruch 4, **dadurch gekennzeichnet, dass** die Vorrichtung umfasst:
einen ersten Ejektor-Vakuumgenerator (7), der eine Saugöffnung (7b), die ausgebildet ist, mit der Abgasausstoßquelle verbunden zu sein, eine Antriebsfluid-Zufuhröffnung (7a), die ausgebildet ist, mit einem Sauerstoffoder Luftvorrat verbunden zu sein, und Mischmittel enthält, die an der Saugöffnung angesaugte Abgase mit Sauerstoff oder Luft mischen, die der Antriebsfluid-Zufuhröffnung zugeführt werden;
einen zweiten Ejektor-Vakuumgenerator (37), der eine Saugöffnung (37b), die ausgebildet ist, mit dem ersten Kondensationsmittel verbunden zu sein, eine Antriebsfluid-Zufuhröffnung (37a), die ausgebildet ist, mit einem Sauerstoff- oder Luftvorrat verbunden zu sein, und Mischmittel enthält, die nicht reagierten, an der Saugöffnung angesaugten Wasserstoff mit Sauerstoff oder Luft mischen, die der Antriebsfluid-Zufuhröffnung zugeführt werden;
und einen dritten Ejektor-Vakuumgenerator (47), der eine Saugöffnung (47b), die ausgebildet ist, mit dem zweiten Reaktionsmittel verbunden zu sein, eine Antriebsfluid-Zufuhröffnung (47a), die ausgebildet ist, mit einem Stickstoffgasvorrat oder einem Luftvorrat verbunden zu sein, und Mischmittel enthält, die an der Saugöffnung angesaugtes Gas mit Stickstoffgas oder Luft mischen, die der Antriebsfluid-Zufuhröffnung zugeführt werden.

6. Vorrichtung nach Anspruch 1 oder 5, **dadurch gekennzeichnet, dass** das Kondensationsmittel (9) ein Abflussbecken oder einen Wärmetauscher umfasst.

7. Vorrichtung nach einem der vorhergehenden Ansprüche, ferner umfassend Rückströmsteuermittel (8a, 8b) zwischen der Abgasausstoßquelle und der Vorrichtung, um zu verhindern, dass Sauerstoff in die Ausstoßquelle zurückströmt.

8. Vorrichtung nach Anspruch 7, **dadurch gekennzeichnet, dass** das Rückströmsteuermittel ein oder mehrere Gasbeschleunigungsmittel umfasst, die die Geschwindigkeit der angesaugten Abgase zu der Vorrichtung hin erhöhen.

9. Vorrichtung nach Anspruch 8, **dadurch gekennzeichnet, dass** das Gasbeschleunigungsmittel eine oder mehrere Platten (8a, 8b) umfasst, die in den Strömungsweg der Abgase zu der Vorrichtung hin eingesetzt sind, wobei die oder jede Platte eine in ihr ausgebildete Öffnung (φ₁, φ₂) hat, die für eine Verengung in dem Strömungsweg sorgt.

10. Vorrichtung nach Anspruch 1, wobei das katalytische Material nur auf einem Teil der Innenfläche des Behälters in Nebeneinanderstellung mit dem Wasserdampfauslass vorgesehen ist.

11. Vorrichtung nach Anspruch 1 oder 10, wobei das katalytische Mittel Platin ist.

12. Vorrichtung nach einem der Ansprüche 9-11, wobei der Behälter ferner einen ersten, mit dem Einlass verbundenen Gasdeflektor (5e), einen zweiten, mit dem Auslass verbundenen Gasdeflektor (5f) und einen Gasdiffusionsfilter (5g) umfasst, der sich durch dass Innere des Behälters im Wesentlichen gleichweit von dem Einlass und Auslass entfernt erstreckt.

## Revendications

1. Appareil destiné à traiter des gaz d'échappement contenant de l'hydrogène, lequel appareil comprend :
des moyens d'aspiration (7,16) destinés à aspirer des gaz d'échappement (G) contenant de l'hydrogène à partir d'une source d'évacuation desdits gaz d'échappement ;
des moyens de mélange (7,16) destinés à mélanger les gaz d'échappement aspirés avec de l'oxygène ou de l'air ;
des moyens de réaction (5) destinés à faire réagir l'hydrogène et l'oxygène ou l'air mélangés pour former de l'eau, lesquels moyens de réaction comprennent des moyens catalytiques (5h) destinés à générer des radicaux libres d'oxygène et
d'hydrogène à partir d'oxygène et desdits gaz d'échappement respectivement, lesquels radicaux libres d'oxygène et d'hydrogène réagissent ensemble pour former de l'eau ;
et des moyens de condensation (9) destinés à condenser l'eau formée dans le réacteur ;
**caractérisé en ce que** ledit appareil comprend un générateur de vide de type éjecteur (7) ayant un orifice d'aspiration (7b) adapté pour un raccord à ladite source d'évacuation desdits gaz d'échappement, un orifice d'alimentation en fluide d'entraînement (7a) adapté pour un raccord à une alimentation en oxygène ou en air, et des moyens de mélange destinés à mélanger les gaz d'échappement aspirés vers l'orifice d'aspiration dudit générateur de vide de type éjecteur avec de l'oxygène ou de l'air fournis à l'orifice d'alimentation en fluide d'entraînement ;
et **en ce que** les ou chaque moyens de réaction (5,6) comprend (comprennent) une cuve étanche à l'air, laquelle cuve comprend une entrée de gaz (5a) et une sortie de vapeur d'eau (5c), et une surface interne de la cuve est doublée d'un matériau catalytique (5h) capable de diviser les molécules d'oxygène et d'hydrogène pour former des radicaux libres.

2. Appareil selon la revendication 1, comprenant :
des moyens d'aspiration (7,16) destinés à aspirer les gaz d'échappement contenant de l'hydrogène à partir d'une source d'évacuation desdits gaz d'échappement ;
des moyens de mélange (7,16) destinés à mélanger les gaz d'échappement aspirés avec de l'oxygène ou de l'air ;
des premiers moyens de réaction (5) destinés à faire réagir l'hydrogène et l'oxygène ou l'air mélangés pour former de l'eau, lesquels moyens de réaction comprennent des moyens catalytiques (5h) destinés à générer des radicaux libres d'oxygène et d'hydrogène à partir d'oxygène et desdits gaz d'échappement, respectivement, lesquels radicaux libres d'oxygène et d'hydrogène réagissent ensemble pour former de l'eau ;
des premiers moyens de condensation (9) destinés à condenser l'eau formée dans le réacteur ;
des seconds moyens de réaction (6) destinés à faire réagir l'hydrogène et l'oxygène (G') n'ayant pas réagi évacués des premiers moyens de réaction pour former de l'eau, lesquels seconds moyens de réaction comprennent des moyens catalytiques (5h) destinés à générer des radicaux libres d'oxygène et d'hydrogène à partir de l'oxygène et de l'hydrogène n'ayant pas réagi, respectivement, lesquels radicaux libres d'oxygène et d'hydrogène réagissent ensemble pour former de l'eau ;
et des seconds moyens de condensation (10) destinés à condenser l'eau formée dans les seconds moyens de réaction.

3. Appareil selon la revendication 2, **caractérisé en ce que** chacun desdits premiers et seconds moyens de condensation (9, 10) comprend indépendamment un réservoir de drainage ou un échangeur de chaleur.

4. Appareil selon la revendication 1, comprenant :
des premiers moyens d'aspiration (7) destinés à aspirer les gaz d'échappement (Go) contenant de l'hydrogène provenant d'une source d'évacuation desdits gaz d'échappement ;
des premiers moyens de mélange (7) destinés à mélanger les gaz d'échappement aspirés avec de l'oxygène ou de l'air ;
des premiers moyens de réaction (5) destinés à faire réagir l'hydrogène et l'oxygène ou l'air mélangés pour former de l'eau, lesquels moyens de réaction comprennent des moyens catalytiques (5h) destinés à générer des radicaux libres d'oxygène et d'hydrogène à partir d'oxygène et desdits gaz d'échappement respectivement, lesquels radicaux libres d'oxygène et d'hydrogène réagissent ensemble pour former de l'eau ;
des moyens de condensation (9) destinés à condenser l'eau formée dans le réacteur ; des seconds moyens d'aspiration (37) destinés à aspirer l'hydrogène (G') n'ayant pas réagi évacué desdits premiers moyens de réaction ;
des deuxièmes moyens de mélange (37) destinés à mélanger l'hydrogène n'ayant pas réagi avec de l'oxygène ou de l'air ;
des seconds moyens de réaction (6) destinés à faire réagir lesdits hydrogène et oxygène ou air n'ayant pas réagi pour former de l'eau, lesquels moyens de réaction comprennent des moyens catalytiques (5h) destinés à générer des radicaux libres d'hydrogène et d'oxygène à partir de l'hydrogène et de l'oxygène n'ayant pas réagi, respectivement, lesquels radicaux libres d'hydrogène et d'oxygène réagissent ensemble pour former de l'eau ;
des troisièmes moyens d'aspiration (47) destinés à aspirer les gaz (G") évacués des seconds moyens de réaction ;
et des moyens d'évacuation (47) destinés à mélanger lesdits gaz évacués desdits seconds moyens de réaction avec de l'air ou de l'azote et à évacuer le mélange résultant de gaz vers l'atmosphère.

5. Appareil selon la revendication 4, **caractérisé en ce que** ledit appareil comprend :
un premier générateur de vide de type éjecteur (7) ayant un orifice d'aspiration (7b) adapté pour un raccord à ladite source d'évacuation desdits gaz d'échappement, un orifice d'alimentation en fluide d'entraînement (7a) adapté pour un raccord à une alimentation d'oxygène ou d'air, et des moyens de mélange destinés à mélanger les gaz d'échappement aspirés vers l'orifice d'aspiration avec de l'oxygène ou de l'air fournis à un orifice d'alimentation en fluide d'entraînement ;
un deuxième générateur de vide de type éjecteur (37) ayant un orifice d'aspiration (37b) adapté pour un raccord auxdits premiers moyens de condensation, un orifice d'alimentation en fluide d'entraînement (37a) adapté pour un raccord à une alimentation d'oxygène ou d'air, et des moyens de mélange destinés à mélanger l'hydrogène n'ayant pas réagi aspiré vers l'orifice d'aspiration avec de l'oxygène ou de l'air fournis à l'orifice d'alimentation en fluide d'entraînement ;
et un troisième générateur de vide de type éjecteur (47) ayant un orifice d'aspiration (47b) adapté pour un raccord auxdits seconds moyens de réaction, un orifice d'alimentation en fluide d'entraînement (47a) adapté pour un raccord à une alimentation d'azote gazeux ou d'air, et des moyens de mélange destinés à mélanger les gaz aspirés vers l'orifice d'aspiration avec de l'azote gazeux ou de l'air fournis à l'orifice d'alimentation en fluide d'entraînement.

6. Appareil selon la revendication 1 ou la revendication 5, **caractérisé en ce que** lesdits moyens de condensation (9) comprennent un réservoir de drainage ou un échangeur de chaleur.

7. Appareil selon l'une quelconque des revendications précédentes, comprenant en outre des moyens de clapet de non-retour (8a, 8b) entre la source d'évacuation des gaz d'échappement et l'appareil pour empêcher le refoulement d'oxygène dans ladite source d'évacuation.

8. Appareil selon la revendication 7, **caractérisé en ce que** lesdits moyens de clapet de non-retour comprennent un ou plusieurs moyens d'accélération de gaz destinés à accroître la vitesse desdits gaz d'échappement aspirés vers l'appareil.

9. Appareil selon la revendication 8, **caractérisé en ce que** lesdits moyens d'accélération de gaz comprennent une ou plusieurs plaques (8a, 8b) insérées dans le trajet d'écoulement desdits gaz d'échappement vers l'appareil, la plaque ou chacune des plaques ayant un orifice (φ₁, φ₂) formé à l'intérieur, lequel orifice forme une constriction dans ledit trajet d'écoulement.

10. Appareil selon la revendication 1, dans lequel le matériau catalytique n'est formé que sur une partie de la surface interne de la cuve en juxtaposition avec la sortie de la vapeur d'eau.

11. Appareil selon la revendication 1 ou la revendication 10, dans lequel ledit matériau catalytique comprend du platine.

12. Appareil selon l'une quelconque des revendications 9 à 11, dans lequel la cuve comprend en outre un premier déflecteur de gaz (5e) associé à l'entrée, un second déflecteur de gaz (5f) associé à la sortie et un filtre de diffusion de gaz (5g) qui s'étend à travers l'intérieur de la cuve quasiment à égale distance de l'entrée et de la sortie.
